# EUROPÄISCHE PATENTANMELDUNG

(11) **EP 1 686 019 A2**
(43) Veröffentlichungstag der Anmeldung: **02.08.2006**
(21) Anmeldenummer: 06001328.1
(22) Anmeldetag: 23.01.2006
(51) Int. Cl.: B60R 21/20

(54) **Sitzintegriertes Seitengassack-Rückhaltesystem**

(30) Priorität: 26.01.2005 DE 102005003706
(71) Anmelder: TRW Automotive GmbH, 73553 Alfdorf (DE)
(72) Erfinder: Werner, Christof, 73557 Mutlangen (DE); Acker, Dominique, 74417 Gschwend (DE)
(74) Vertreter: Kitzhofer, Thomas

(57) **Zusammenfassung**

Bei einem sitzintegrierten Seitengassack-Rückhaltesystem mit einem Seitengassack (12) und einem innerhalb des Seitengassacks (12) angeordneten Gasgenerator (14) ist der Gasgenerator (14) ausschließlich über den Seitengassack (12) mit einem fahrzeugfesten Bauteil verbunden.

## Beschreibung

Die Erfindung betrifft ein sitzintegriertes Seitengassack-Rückhaltesystem.

Ein Gassackmodul in einem Rückhaltesystem muß mehrere Anforderungen erfüllen. Zum einen soll es möglichst kompakt sein, um den geringen vorhandenen Bauraum im Fahrzeug optimal nutzen zu können. Zum anderen müssen sowohl der Seitengassack als auch der Gasgenerator aus offensichtlichen Gründen fest und sicher mit dem Fahrzeug verbunden sein.

Zur Befestigung des Gassackmoduls entweder in einem Gehäuse oder direkt an einem fahrzeugfesten Bauteil wird oft der Gasgenerator genützt. Hierzu werden z.B. vom Gasgenerator abstehende Befestigungsbolzen oder den Gasgenerator umgreifende Schellen eingesetzt. Bei diesen Konstruktionen sind jedoch zusätzlich zum Seitengassack und dem Gasgenerator meist weitere Bauteile erforderlich, und die Befestigungsmöglichkeiten sind durch die Geometrie des Gasgenerators oder der Schelle vorgegeben.

Aufgabe der Erfindung ist es, ein kostengünstiges und flexibel einsetzbares Rückhaltesystem zu schaffen.

Dies wird bei einem sitzintegrierten Seitengassack-Rückhaltesystem mit einem Seitengassack und einem innerhalb des Seitengassacks angeordneten Gasgenerator erreicht, indem der Gasgenerator ausschließlich über den Seitengassack mit einem fahrzeugfesten Bauteil verbunden ist. Sowohl der Seitengassack als auch der Gasgenerator werden also nur über den Seitengassack an einem fahrzeugfesten Bauteil wie z.B. einem Fahrzeugsitz gehalten. Die gesamten auftretenden Kräfte werden demnach vom Seitengassack an das fahrzeugfeste Bauteil weitergeleitet. Der Gasgenerator ist lediglich und ausschließlich am Seitengassack selbst befestigt, nicht aber direkt am fahrzeugfesten Bauteil oder einem Gehäuse. Der Vorteil dieser Anordnung liegt unter anderem in der Möglichkeit, die Anbindung zum Fahrzeug sehr flexibel zu gestalten, da die Befestigungspunkte durch den Seitengassack vorgegeben werden. Außerdem läßt sich die Anzahl der benötigten einzelnen Bauteile gering halten. Über die Befestigungspunkte am Seitengassack läßt sich auch einfach eine Bauraumoptimierung erreichen.

Der Gasgenerator ist vorzugsweise gegenüber dem fahrzeugfesten Bauteil stets lagefixiert. Der Gasgenerator ist vorteilhaft so angeordnet, daß er in einem aufgeblasenen Zustand des Seitengassacks an eine Wand des Seitengassacks angrenzt.

Der Seitengassack und der Gasgenerator sind bevorzugt Bestandteil eines Gassackmoduls, und das Gassackmodul ist ausschließlich über den Seitengassack mit dem fahrzeugfesten Bauteil verbunden. Vorzugsweise ist das Gassackmodul in einer Sitzlehne angeordnet.

Auf ein separates Gehäuse für das Gassackmodul kann bei dem erfindungsgemäßen Rückhaltesystem verzichtet werden. Hierdurch fällt ein weiteres Bauteil weg, was Gewicht und Kosten reduziert. Es ist möglich, eine Außenbegrenzung des Gassackmoduls durch eine Gewebelage zu bilden. Die Gewebelage kann ein Teil des Seitengassacks selbst oder eine zusätzliche Schutzhülle sein, die das gefaltete Gassackpaket umgibt und sich bei Aktivierung des Gassackmoduls an vorgesehener Stelle öffnet, um den Seitengassack freizugeben. Das Gassackmodul besteht dann im wesentlichen nur noch aus dem Gasgenerator und dem gefalteten Seitengassack.

Die Befestigung des Gasgenerators kann z.B. über wenigstens eine Nietverbindung realisiert sein, aber auch über wenigstens einen Bolzen, der beispielsweise in radialer oder axialer Richtung vom Gasgenerator abstehen kann. Entgegengesetzt zum Stand der Technik dient jedoch dieser Bolzen nur zur Befestigung des Gasgenerators am Seitengassack, nicht aber zur Befestigung des Gasgenerators an einem Gehäuse oder am Fahrzeug selbst.

Die Befestigung des Seitengassacks am fahrzeugfesten Bauteil erfolgt vorteilhaft über wenigstens ein mit dem Gewebe des Seitengassacks verbundenes Befestigungsmittel. Hierzu können z.B. eine oder mehrere Metallösen an den jeweiligen Befestigungspunkten am Seitengassack befestigt sein, über die dann eine herkömmliche Verschraubung oder Verrastung mit dem fahrzeugfesten Bauteil erfolgt. Die Befestigungsmittel können z.B. in extra abgenähten, nicht aufblasbaren und verstärkten Abschnitten des Seitengassacks angeordnet sein. Bevorzugt befinden sich die Befestigungsmittel in unmittelbarer Nähe zum Gasgenerator. Über die Anordnung der Befestigungsmittel am Seitengassack läßt sich flexibel und raumoptimiert die Befestigung des Gassackmoduls am fahrzeugfesten Bauteil an verschiedene Einbaulagen, z.B. in verschiedenen Fahrzeugteilen oder verschiedenen Fahrzeugtypen, anpassen. Als Befestigungsmittel des Seitengassacks am Fahrzeug können auch Ösen oder Scheiben mit daran befestigten Einpreßbolzen oder Gewindebolzen eingesetzt werden.

Erfindungsgemäß ist der Seitengassack in einen Fahrzeugsitz integriert. Es ist bevorzugt an einem Sitzlehnenrahmen befestigt.

Die Erfindung wird im nachfolgenden anhand eines Ausführungsbeispiels im Zusammenhang mit den beigefügten Zeichnungen näher beschrieben. In den Zeichnungen zeigen:
- Figur 1 eine Draufsicht auf ein Seitengassackmodul eines erfindungsgemäßen Rückhaltesystems;
- Figur 2 eine Seitenansicht des Seitengassackmoduls aus Figur 1;
- Figur 3 eine schematische Ansicht des ausgebreiteten Seitengassacks aus Figur 1 mit eingesetztem Gasgenerator;
- Figur 4 einen Schnitt durch ein Seitenteil eines Fahrzeugsitzes mit einem erfindungsgemäßen Seitengassack-Rückhaltesystem; und
- Figur 5 einen Schnitt entlang der Linie V-V in Figur 4.

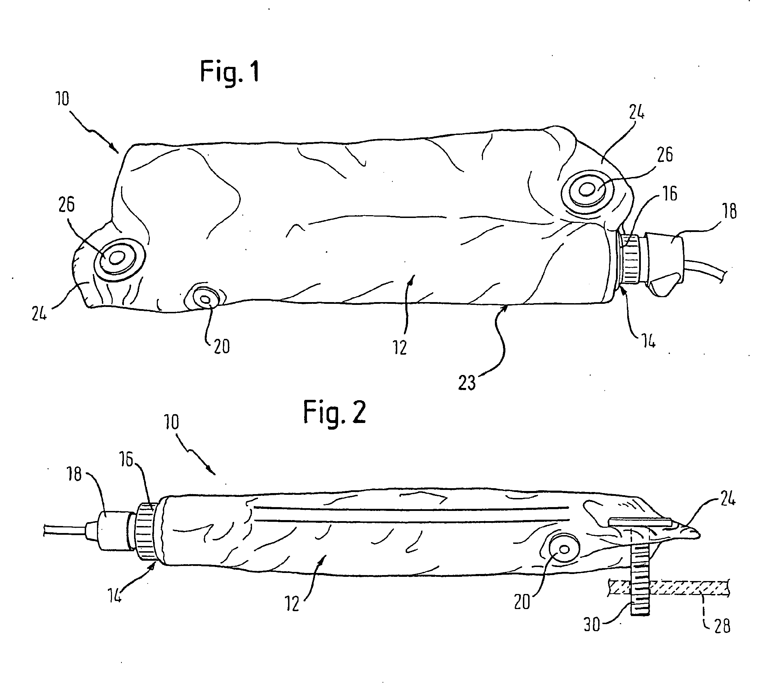

In Figur 1 ist eine Baugruppe aus einem Seitengassack 12 und einem Gasgenerator 14, der im Inneren des Seitengassacks 12 aufgenommen ist, dargestellt. Der Seitengassack 12 ist z.B. aus zwei oder mehr miteinander zu wenigstens einer aufgeblasenen Kammer verbundenen Gewebelagen gebildet. Der Seitengassack 12 und der Gasgenerator 14 sind Bestandteil eines Gassackmoduls 10, welches wiederum Teil eines Fahrzeuginsassen-Rückhaltesystems ist. Das Gassackmodul 10 besteht in diesem Fall im wesentlichen aus dem Seitengassack 12 und dem Gasgenerator 14.

Unter "aufgenommen" wird hier verstanden, daß der Gasgenerator 14 wenigstens zum Großteil seiner Länge, zumindest aber mit seinem Gasauslaßbereich im Seitengassack 12 selbst angeordnet ist. Im vorliegenden Ausführungsbeispiel ragt lediglich ein Anzünderabschnitt 16 des Gasgenerators 14 aus dem Seitengassack 12 heraus, um die Kontaktierung mit einem Stecker 18 und einem daran befindlichen Kabel, das zu einer nicht gezeigten Steuerelektronik führt, zu erleichtern.

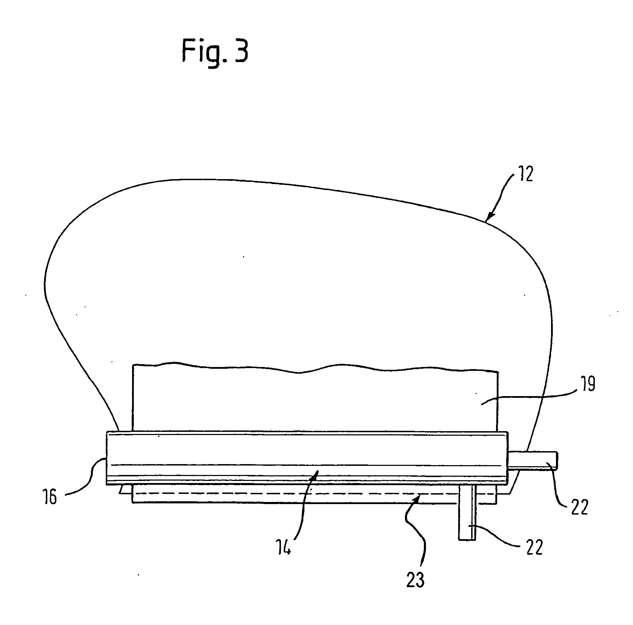

Der Seitengassack 12 ist zu einem Paket gefaltet und in gefaltetem Zustand mit einer (in Figur 3 angedeuteten) Gewebelage 19 fixiert und geschützt, wie dies aus dem Stand der Technik bekannt ist.

Der Gasgenerator 14 ist im Seitengassack 12 über eine Befestigung 20, hier eine Nietverbindung, arretiert. Anstatt oder ergänzend zu der Befestigung 20 können auch radial oder axial vom Gasgenerator 14 abstehende Bolzen 22 (siehe Fig. 3) zur Verbindung des Seitengassacks 12 mit dem Gasgenerator 14 eingesetzt werden. Es wäre möglich, den Gasgenerator 14 in einer Tasche im Seitengassack 12 anzuordnen. Die Befestigung 20 hält den Gasgenerator 14 immer in unmittelbarer Nähe zu einer Wand 23 des Seitengassacks 12, so daß der Gasgenerator 14 angrenzend an die Wand 23 angeordnet ist, und zwar sowohl im nicht aufgeblasenen als auch im aufgeblasenen Zustand des Gassacks 12. Eventuell kann noch eine Verstärkungs- oder Schutzlage zwischen dem Gasgenerator 14 und der Wand 23 des Seitengassacks 12 liegen.

An im gezeigten Beispiel zwei Abschnitten 24 ist der Seitengassack 12 verstärkt und mit jeweils einer Metallöse als Befestigungsmittel 26 versehen. Die Abschnitte 24 bilden Befestigungspunkte, über die das Gassackmodul 10 im eingebauten Zustand mit einem fahrzeugfesten Bauteil 28, hier einem Fahrzeugsitz (angedeutet in Fig. 2) verbunden ist. Hierzu können z.B., wie in Figur 2 angedeutet, herkömmliche Schrauben 30 eingesetzt werden, oder die Befestigungsmittel 26 können direkt mit Einpreßbolzen oder Einpreßschrauben versehen sein. Der Gasgenerator 14 ist gegenüber dem fahrzeugfesten Bauteil 28, an dem das Gassackmodul 10 befestigt ist, stets lagefixiert, bewegt sich also gegenüber diesem möglichst wenig.

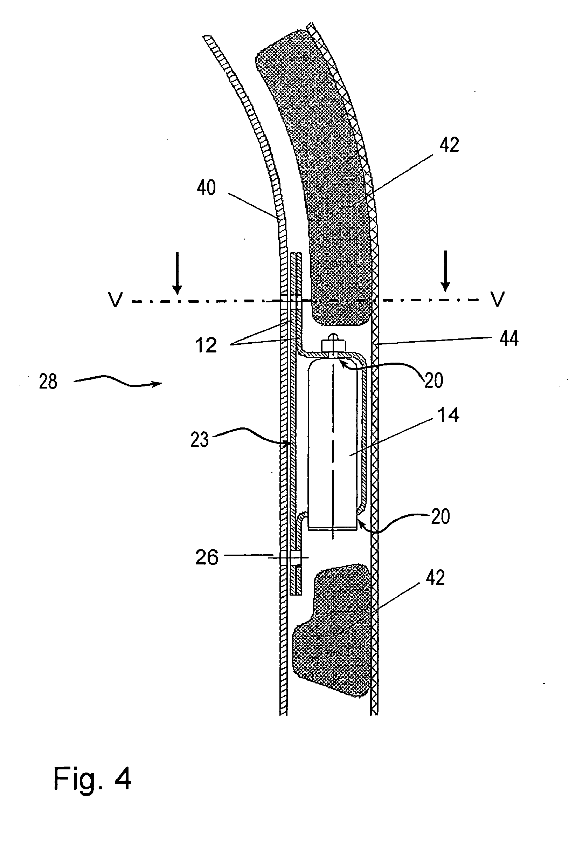

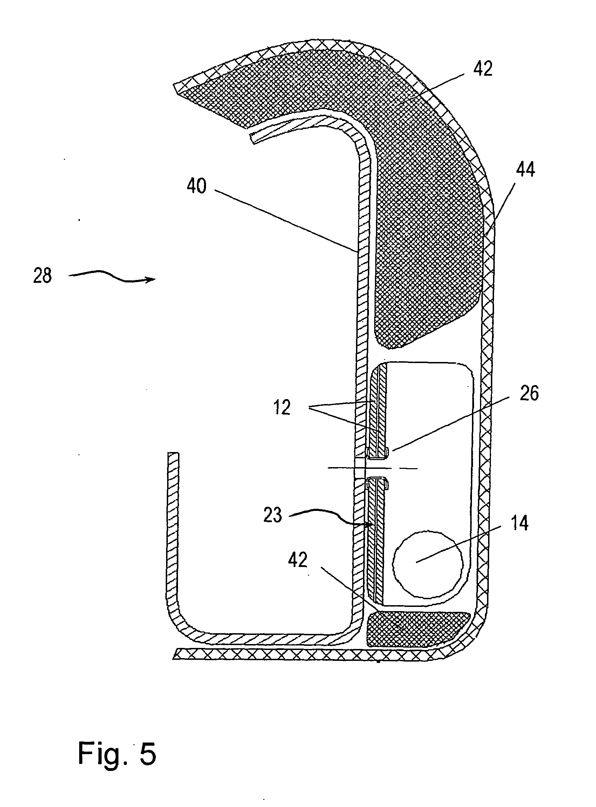

In den Figuren 4 und 5 ist das Gassackmodul 10 in ein Sitzseitenteil eines Fahrzeugsitzes 28 integriert gezeigt. Der Seitengassack 12 ist über die Befestigungspunkte 26 mit einem Sitzlehnenrahmen 40 fest verbunden. Der Sitzlehnerahmen 40 ist mit einer Schicht 42 aus Schaumstoff bedeckt, die eine Aussparung für das Gassackmodul 10 aufweist. Schicht 42 und Gassackmodul 10 sind von einem Sitzbezug 44 überzogen, der im Bereich des Gassackmoduls 10 auf bekannte Weise mit einer Sollbruchstelle versehen sein kann. Bei einer Aktivierung des Gassackmoduls 10 entfaltet sich der Seitengassack 12 aus seiner Aussparung heraus, um dem Fahrzeuginsassen Schutz zu bieten.

Das erfindungsgemäße Gassackmodul 10 wird ohne ein separates zusätzliches Gehäuse am Sitzlehnenrahmen 40 montiert. Das Gassackmodul 10 besteht also nur aus dem Seitengassack 12 und dem Gasgenerator 14 (sowie hier der Gewebelage 19). Auch auf ein Diffusorgehäuse um den Gasgenerator 14 kann verzichtet werden. Natürlich wäre es aber auch denkbar, den gefalteten Seitengassack 12 teilweise oder vollständig in einem Gehäuse anzuordnen.

## Patentansprüche

1. Sitzintegriertes Seitengassack-Rückhaltesystem mit einem Seitengassack (12) und einem innerhalb des Seitengassacks (12) angeordneten Gasgenerator (14),
wobei der Gasgenerator (14) ausschließlich über den Seitengassack (12) mit einem fahrzeugfesten Bauteil (28) verbunden ist.

2. Sitzintegriertes Seitengassack-Rückhaltesystem nach Anspruch 1, **dadurch gekennzeichnet, daß** der Gasgenerator (14) im aufgeblasenen Zustand des Seitengassacks (12) angrenzend an eine Wand (23) des Seitengassacks (12) angeordnet ist.

3. Sitzintegriertes Seitengassack-Rückhaltesystem nach einem der vorhergehenden Ansprüche, **dadurch gekennzeichnet, daß** der Seitengassack (12) und der Gasgenerator (14) Bestandteil eines Seitengassackmoduls (10) sind und das Seitengassackmodul (10) ausschließlich über den Seitengassack (12) mit dem Fahrzeugsitz (28) verbunden ist.

4. Sitzintegriertes Seitengassack-Rückhaltesystem nach Anspruch 3, **dadurch gekennzeichnet, daß** eine Außenbegrenzung des Seitengassackmoduls (10) durch eine Gewebelage (19) gebildet ist.

5. Sitzintegriertes Seitengassack-Rückhaltesystem nach einem der vorhergehenden Ansprüche, **dadurch gekennzeichnet, daß** der Gasgenerator (14) am Seitengassack (12) über wenigstens eine Nietverbindung befestigt ist.

6. Sitzintegriertes Seitengassack-Rückhaltesystem nach einem der Ansprüche 1 bis 5, **dadurch gekennzeichnet, daß** der Gasgenerator (14) am Seitengassack (12) über wenigstens einen Bolzen (22) befestigt ist.

7. Sitzintegriertes Seitengassack-Rückhaltesystem nach einem der vorhergehenden Ansprüche, **dadurch gekennzeichnet, daß** am Seitengassack (12) wenigstens ein mit dem Gewebe des Seitengassacks (12) verbundenes Befestigungsmittel vorgesehen ist.

8. Sitzintegriertes Seitengassack-Rückhaltesystem nach einem der vorhergehenden Ansprüche, **dadurch gekennzeichnet, daß** der Seitengassack (12) an einem Sitzlehnenrahmen (40) eines Fahrzeugsitzes befestigt ist.
